# EUROPEAN PATENT APPLICATION

(11) **EP 4 745 420 A1**
(43) Date of publication of application: **20.05.2026**
(21) Application number: 24839753.1
(22) Date of filing: 09.07.2024
(51) Int. Cl.: F16C 33/66, B23B 19/02, B23Q 11/12, F16C 19/16, F16C 33/58, F16C 35/12, F16N 31/00

(54) **BEARING DEVICE AND SPINDLE DEVICE**

(30) Priority: 10.07.2023 JP 2023113273
(71) Applicant: NSK LTD., Tokyo 141-8560 (JP)
(72) Inventor: OGURI, Shoichiro, Fujisawa-shi, Kanagawa 251-8501 (JP); INAGAKI, Yoshifumi, Fujisawa-shi, Kanagawa 251-8501 (JP)
(74) Representative: Grünecker Patent- und Rechtsanwälte PartG mbB
(86) International application number: PCT/JP2024/024789
(87) International publication number: WO 2025/013863

(57) **Abstract**

Provided is a front bearing device comprising: a rolling bearing (20) that rotatably supports a spindle (60) with respect to a housing (50); and an outer ring spacer (40) and an outer ring retainer that are fitted into the housing (50) to position an outer ring (22) of the rolling bearing (20) in the axial direction. Lubricant (G) is supplied to the inside of the rolling bearing (20) through a lubricant supply path (52). One side surface (22b) of the outer ring (22) is offset to the axial center side relative to a side surface (21b) of an inner ring (21) of the rolling bearing (20), and an opening (41) penetrating the outer ring spacer (40) in the radial direction is formed at an end surface (43) of the outer ring spacer (40) abutting the offset side surface (22b).

## Description

### TECHNICAL FIELD

The present invention relates to a bearing device and a spindle device using the bearing device, and more particularly to improved bearing device and spindle device capable of efficiently discharging a lubricant replenished to a bearing.

### BACKGROUND ART

In the related art, a bearing device for supporting a spindle or the like for a machine tool main shaft uses jet lubrication, oil lubrication such as oil mist or oil air, or grease lubrication. In recent years, with an increase in spindle speed, lean lubrication in which a trace amount of lubricating oil is intermittently applied to a raceway surface and a rolling surface of a rolling bearing at high speed and a lubrication method in which grease is intermittently supplied into a rolling bearing space have been developed, and performance has improved at speeds of 1 million dmN or more (dm: pitch circle diameter (mm) of the rolling bearing, N: rotational speed (min-1). In a lubrication device for supplying or replenishing a lubricant such as lubricating oil or grease to the bearing as described above, appropriately discharging the supplied lubricant is an important factor for reducing the stirring resistance of the lubricant accompanying the rotation of the spindle to be small and avoiding a temperature rise and a torque increase of the bearing.

Grease inside a general main shaft is filled at 10% to 30% with respect to a space volume of the bearing, and when base oil inside the grease that plays a role of lubricating the rotating bearing is consumed, a lubrication failure occurs and seizure of the bearing is caused. Therefore, the life of the grease-filled main shaft is the life of the grease, that is, the consumption time of the base oil. In order to extend the grease life, there is a method of increasing the amount of filled grease inside the bearing or providing grease in a spacer adjacent to the bearing, but when the amount of filled grease is large, the running-in operation takes time. Further, when a large amount of grease in a grease reservoir of an outer ring portion and the spacer of the bearing reaches a rolling surface of the bearing, there is a risk that a rapid temperature rise occurs and seizure is caused. Further, in the type of replenishing the grease, since fresh grease is intermittently supplied to the bearing, the life can be extended as compared with that of filling grease, but the risk of seizure due to a rapid temperature rise is very high unless the grease is properly discharged from the bearing.

Patent Literature 1 discloses a main shaft device (bearing device) including a plurality of first radial oil passages formed in an outer ring positioning member, an entire circumferential groove communicating with the plurality of first radial oil passages, and a second radial oil passage formed in a housing so as to communicate an oil drain hole of the housing with the entire circumferential groove. Accordingly, lubricating oil can be discharged from the oil drain hole regardless of the turning posture, and abnormal heat generation due to an excessive amount of the lubricant inside the bearing can be prevented.

### CITATION LIST

### PATENT LITERATURE

Patent Literature 1: JP2016-2622A

### SUMMARY OF INVENTION

### TECHNICAL PROBLEM

However, the bearing device in the related art pushes out the lubricant to the outside of the bearing by further supplying the lubricant into the bearing space that is filled with the lubricant by continuous supply. Therefore, a force for discharging the lubricant to the outside of the bearing is small. Therefore, it is insufficient to fill a storage space formed in the outer ring spacer with the discharged lubricant, and there is a limit to continuously replenishing the lubricant for a long time.

The present invention has been made in view of the above-described problems, and an object thereof is to provide a bearing device and a spindle device that can efficiently discharge a lubricant supplied to a bearing, can stably perform a continuous operation for a long time while maintaining a favorable lubrication state, can achieve a long life of the bearing, and can facilitate the maintenance.

### SOLUTION TO PROBLEM

The above object of the present invention is implemented by the following configurations.
(1) A bearing device including:
   a housing;
   a rolling bearing that rotatably supports a spindle with respect to the housing; and
   an outer ring positioning member that is fitted into the housing and positions an outer ring of the rolling bearing in an axial direction, wherein
   a lubricant is supplied to an inside of the rolling bearing via a lubricant supply path,
   at least one side surface of the outer ring is offset from a side surface of an inner ring of the rolling bearing toward an axial center side, and
   an opening running through the outer ring positioning member in a radial direction is formed at an end surface of the outer ring positioning member abutting the offset side surface.
(2) A spindle device for a machine tool main shaft in which a spindle is rotatably supported by the bearing device according to (1).
(3) A spindle device for a high-speed motor in which a spindle is rotatably supported by the bearing device according to (1).

### ADVANTAGEOUS EFFECTS OF INVENTION

According to the bearing device of the present invention, it is possible to efficiently discharge the lubricant supplied to the bearing, to stably perform a continuous operation for a long time while maintaining a good lubrication state, and to extend the life of the bearing.

Further, according to the spindle device for a machine tool main shaft and the spindle device for a high-speed motor of the present invention, since the spindle is rotatably supported by the bearing device described above, the stirring resistance of the lubricant accompanying the rotation of the spindle can be reduced to be small, a temperature rise and a torque increase of the bearing can be restricted, the life of the bearing can be extended, and the maintenance is facilitated.

### BRIEF DESCRIPTION OF DRAWINGS

[FIG. 1] FIG. 1 is a cross sectional view of a spindle device for a machine tool main shaft to which a bearing device according to a first embodiment of the present invention is applied.
[FIG. 2] FIG. 2 is an enlarged view of a main part of the bearing device illustrated in FIG. 1.
[FIG. 3] FIG. 3 is an enlarged cross-sectional view of a rolling bearing in a second row from an axial front side among four rolling bearings combined in a back-to-back manner illustrated in FIG. 2.
[FIG. 4] FIG. 4 is a cross-sectional view of a main part of a bearing device according to a second embodiment of the present invention.
[FIG. 5] FIG. 5 is an enlarged cross-sectional view of the rolling bearing illustrated in FIG. 4.
[FIG. 6] FIG. 6 is a cross-sectional view of a main part of a bearing device according to a third embodiment of the present invention.
[FIG. 7] FIG. 7 is an enlarged cross-sectional view of the rolling bearing illustrated in FIG. 6.
[FIG. 8] FIG. 8 is an enlarged cross-sectional view of a rolling bearing according to a first modification.
[FIG. 9] FIG. 9 is an enlarged cross-sectional view of a rolling bearing according to a second modification.
[FIG. 10] Sections (a) and (b) of FIG. 10 are a top view and a front view of an outer ring positioning member.
[FIG. 11] Sections (a) and (b) of FIG. 11 are a top view and a front view of an outer ring positioning member according to a modification.
[FIG. 12] FIG. 12 is an enlarged cross-sectional view of a main part of a bearing device according to a fourth embodiment of the present invention.
[FIG. 13] Sections (a) and (b) of FIG. 13 are a top view and a front view of an outer ring positioning member illustrated in FIG. 12.
[FIG. 14] FIG. 14 is an enlarged cross-sectional view of a main part of a bearing device according to a fifth embodiment of the present invention.
[FIG. 15] FIG. 15 is an enlarged cross-sectional view of a main part of a bearing device according to a sixth embodiment of the present invention.
[FIG. 16] FIG. 16 is an enlarged cross-sectional view of a bearing device according to a seventh embodiment of the present invention.

### DESCRIPTION OF EMBODIMENTS

Hereinafter, bearing devices and spindle devices according to embodiments of the present invention will be described in detail with reference to the drawings. Although cases where the bearing devices according to the embodiments are applied to a spindle device for a machine tool main shaft will be described, it is needless to say that the bearing devices can be applied to a spindle device for a high-speed motor.

### (First Embodiment)

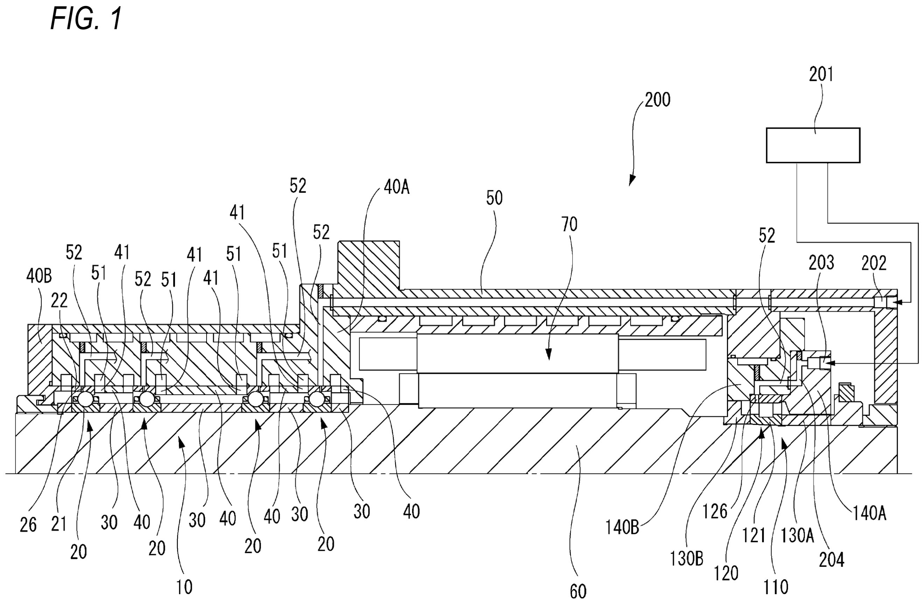

FIG. 1 is a cross-sectional view of a spindle device 200 for a machine tool main shaft to which a front bearing device 10 according to a first embodiment of the present invention is applied.

As illustrated in FIG. 1, the spindle device 200 is of a motor built-in type. A spindle 60 is rotatably supported with respect to a housing 50 by the front bearing device 10 disposed forward of a motor 70 and a rear bearing device 110 disposed rearward of the motor 70. The front bearing device 10 includes four rolling bearings 20 combined in a back-to-back manner, and the rear bearing device 110 includes one rolling bearing 120. Of course, the number and combination form of the plurality of rolling bearings 20 to be combined are not limited thereto.

The rear bearing device 110 includes the rolling bearing 120 that is a cylindrical roller bearing rotatably supporting the spindle 60 with respect to the housing 50, outer ring retainers 140A and 140B that are outer ring positioning members fitted into the housing 50 to position an outer ring 122 of the rolling bearing 120 in an axial direction, and inner ring spacers 130A and 130B that are fitted onto the spindle 60 to position an inner ring 121 of the rolling bearing 120 in the axial direction. The rear bearing device 110 supplies a lubricant G to an inside of the rolling bearing 120 via a lubricant supply path 52.

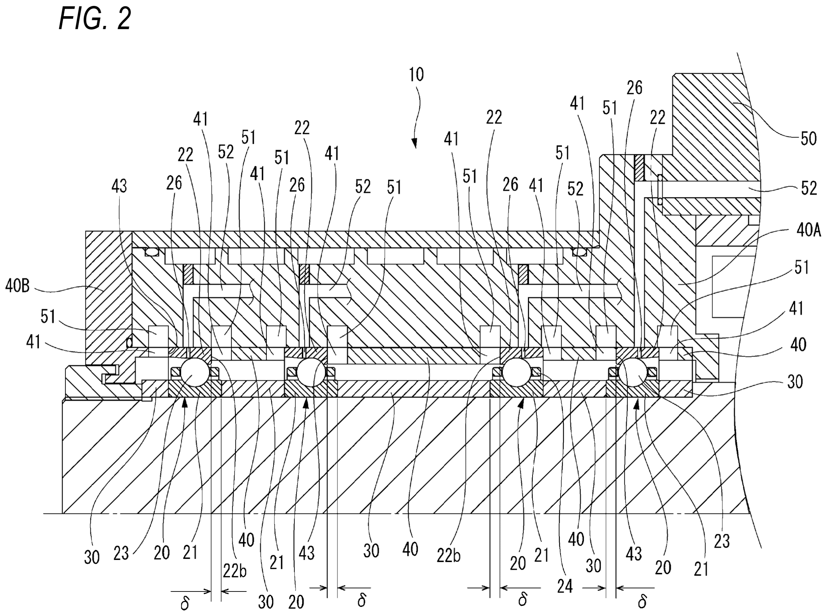

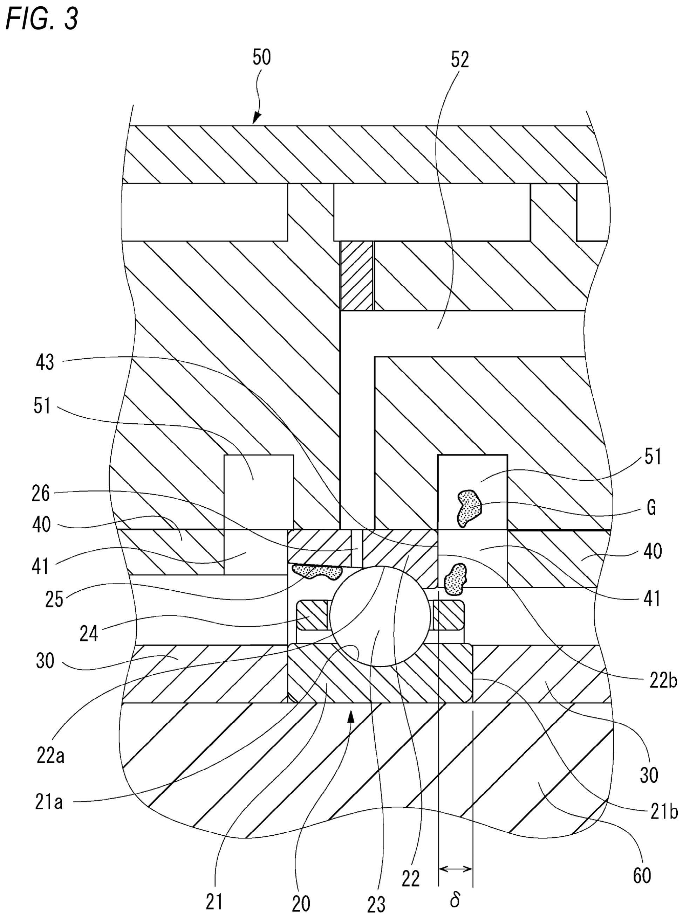

FIG. 2 is an enlarged view of a main part of the front bearing device 10 illustrated in FIG. 1. FIG. 3 is an enlarged cross-sectional view of the rolling bearing 20 in the second row from an axial front side in the axial direction among the four rolling bearings 20 combined in a back-to-back manner illustrated in FIG. 2.

As illustrated in FIG. 2, the front bearing device 10 according to the first embodiment includes the housing 50, the rolling bearing 20 that rotatably supports the spindle 60 with respect to the housing 50, an outer ring spacer 40 and an outer ring retainer 40B that are outer ring positioning members fitted into the housing 50 to position an outer ring 22 of the rolling bearing 20 in the axial direction, and an inner ring spacer 30 fitted onto the spindle 60 to position an inner ring 21 of the rolling bearing 20 in the axial direction. The front bearing device 10 supplies the lubricant G to the inside of the rolling bearing 20 via the lubricant supply path 52.

In the housing 50, a plurality of lubricant supply paths 52 communicating with an oil supply hole 26 of the outer ring 22 of each rolling bearing 20 and an oil supply hole 126 of the outer ring 122 of the rolling bearing 120 from an axial rear side of the housing 50 are formed. A lubricant supply unit 201 is provided outside the housing 50, and an opening 202 through which a pipe from the lubricant supply unit 201 passes, a relay joint that relays a pipe from the lubricant supply unit 201, or the like is provided at an axial rear end surface of the housing 50.

Therefore, the supply of the lubricant G to bearing spaces of the plurality of rolling bearings 20 is performed via the plurality of lubricant supply paths 52 by connecting the lubricant supply unit 201 to the opening 202. In addition, the supply of the lubricant G to a bearing space of the rolling bearing 120 is performed, via the lubricant supply path 52 including a communication hole 204 formed in the outer ring retainer 140A, by connecting the lubricant supply unit 201 to an opening 203 provided in an axial rear end surface of the outer ring spacer retainer 140A.

As illustrated in FIG. 3, each of the four rolling bearings 20 combined in a back-to-back manner is an angular contact ball bearing, and includes the inner ring 21, the outer ring 22, a plurality of balls 23 that are rolling elements rollably disposed between an inner ring raceway surface 21a of the inner ring 21 and an outer ring raceway surface 22a of the outer ring 22, and a cage 24 that rotatably holds the plurality of balls 23. The outer ring 22 includes a tapered counter bore 25 at an inner peripheral surface on one side (left side in FIG. 3) in the axial direction with respect to the outer ring raceway surface 22a, and the oil supply hole 26 running through in a radial direction and opening to the counter bore 25 near the outer ring raceway surface 22a.

As will be described later, an axial back surface side of the outer ring 22 is shortened toward an axial center side, and it is difficult to guide the cage 24 by the inner peripheral surface of the outer ring 22. Therefore, a guide type of the cage 24 of the first embodiment is a ball guide type guided by the balls 23 or an inner ring guide type guided by the inner ring 21.

Further, in each rolling bearing 20 of the first embodiment, one side surface (axial end surface on the back surface side) 22b of the outer ring 22 is offset from a side surface (axial end surface on the back surface side) 21b of the inner ring 21 toward the axial center side by a dimension δ.

That is, in the rolling bearing 20, axial positions of the axial end surfaces on a front surface side of the outer ring 22 and the inner ring 21 are the same, axial positions of the axial end surfaces on the back surface side of the outer ring 22 and the inner ring 21 are different, and a width of the outer ring 22 is shorter than a width of the inner ring 21. Accordingly, a bearing space between an outer peripheral surface of the inner ring 21 and the inner peripheral surface of the outer ring 22 is configured such that an axial back surface side thereof is opened to a radially outer side.

Further, an opening (drain hole) 41 running through the outer ring spacer 40 or the outer ring retainer 40B in the radial direction is formed at an end surface 43 of the outer ring spacer 40 and the outer ring retainer 40B abutting the one side surface 22b of the offset outer ring 22. A storage space 51 capable of storing the lubricant G discharged from the inside of the rolling bearing 20 is provided in the housing 50 on a radially outer side of the opening 41.

The storage space 51 is an annular space formed on an outer peripheral side of the opening 41. Therefore, the bearing space of the rolling bearing 20 communicates with the storage space 51 via the opening 41 and a portion opened to the radially outer side on the axial back surface side of the outer ring 22.

In the front bearing device 10 configured as described above, the lubricant G supplied from the lubricant supply unit 201 is supplied to the rolling bearing 20 via the lubricant supply path 52 and the oil supply hole 26 of the outer ring 22. For example, when the lubricant G is grease, a predetermined amount of grease is periodically supplied at predetermined intervals. The lubricant G supplied to the inside of the rolling bearing 20 lubricates each part of the rolling bearing 20, and a part thereof is retained inside the rolling bearing 20. Of the lubricant G retained inside the rolling bearing 20, the lubricant G that is unnecessary is pushed out to the outside of the rolling bearing 20 and discharged.

Further, a part of the lubricant G that is unnecessary is flicked off to a radially outer side of the rolling bearing 20 by a centrifugal force due to a rotational force of the inner ring 21 and the cage 24, is forcibly and continuously discharged to the storage space 51 via the opening 41 and the portion opened to the radially outer side on the axial back surface side of the outer ring 22, and is stored in the storage space 51.

That is, in the rolling bearing 20, the one side surface 22b of the outer ring 22 is offset from the side surface 21b of the inner ring 21 toward the axial center side by the dimension δ, and the portion opened to the radially outer side on the axial back surface side of the outer ring 22 is formed. Therefore, the lubricant G retained inside the rolling bearing 20 can be quickly discharged to the opening 41, and the occurrence of an abnormal temperature rise due to the lubricant G reaching the inner ring raceway surface 21a and the outer ring raceway surface 22a of the rolling bearing 20 again can be restricted.

In addition, the discharge from the portion opened to the radially outer side on the axial back surface side of the outer ring 22 can also balance a supply amount and a discharge amount of the lubricant G due to a difference in rotational speed of the rolling bearing 20. For example, in the case of high-speed rotation, it is necessary to increase the supply amount of the lubricant G in order to prevent early damage due to depletion of the lubricant G caused by heat generation. However, if the supply amount is unnecessarily increased, the lubricant G becomes excessive, which may cause unstable temperature rise or abnormal heat generation. However, since the inner ring 21 and the cage 24 rotate at a high speed, the centrifugal force is large, and the discharge amount of the lubricant G also increases accordingly. Therefore, even when the supply amount is increased, the amount of the lubricant G remaining inside the rolling bearing 20 does not increase, and an appropriate amount of the lubricant G can be held inside and near the rolling bearing 20.

On the other hand, in the case of low-speed rotation, even when the supply amount is reduced, since the centrifugal force of the inner ring 21 and the cage 24 decreases, the discharge amount of the lubricant G is not increased, and the lubricant G is not excessively discharged. As described above, by making the width of the outer ring 22 shorter than the width of the inner ring 21 and providing the bearing space with the portion opened to the radially outer side, the supply amount and the discharge amount of the lubricant G are appropriately linked according to the rotational speed, and a favorable lubrication environment is always obtained.

Either grease or oil is effective as the lubricant G, and heat generation can be restricted by reducing stirring resistance. When the storage space 51 is filled with the lubricant G, it is necessary to discharge the lubricant G to the outside of the front bearing device 10. But according to the present embodiment, a discharge passage (not illustrated) that communicates the storage space 51 provided in the housing 50 with an external space is provided, and the lubricant G can be almost discharged by being suctioned from the outside, so that the maintenance is facilitated. In particular, in the case of oil replenishment lubrication, the discharge passage to the external space is effective.

As described above, according to the front bearing device 10 of the first embodiment, the lubricant G supplied to the inside of the rolling bearing 20 is flicked off to an outer diameter side from the portion opened to the radially outer side on the axial back surface side of the outer ring 22 by the action of the centrifugal force due to the rotational force of the inner ring 21 and the cage 24, and is stored in the storage space 51 via the opening 41. Accordingly, the stirring resistance of the lubricant G is reduced, heat generation is restricted, a favorable lubrication state is maintained, and as a result, the life of the rolling bearing 20 is extended. Since the magnitude of the centrifugal force that flicks off the lubricant G changes according to the rotational speed of the rolling bearing 20, that is, the inner ring 21 and the cage 24, it is possible to appropriately supply the lubricant according to the rotational speed.

According to the spindle device 200 for a machine tool main shaft to which the front bearing device 10 according to the first embodiment is applied, the spindle 60 of the spindle device for a machine tool main shaft rotating at a high speed can be supported by the rolling bearing 20 having a long life, and the maintenance is facilitated.

Of course, even when the front bearing device 10 according to the first embodiment is applied to a spindle device for a high-speed motor, the spindle of the spindle device for a high-speed motor rotating at a high speed can be supported by the rolling bearing 20 having a long life, and the maintenance is facilitated.

### (Second Embodiment)

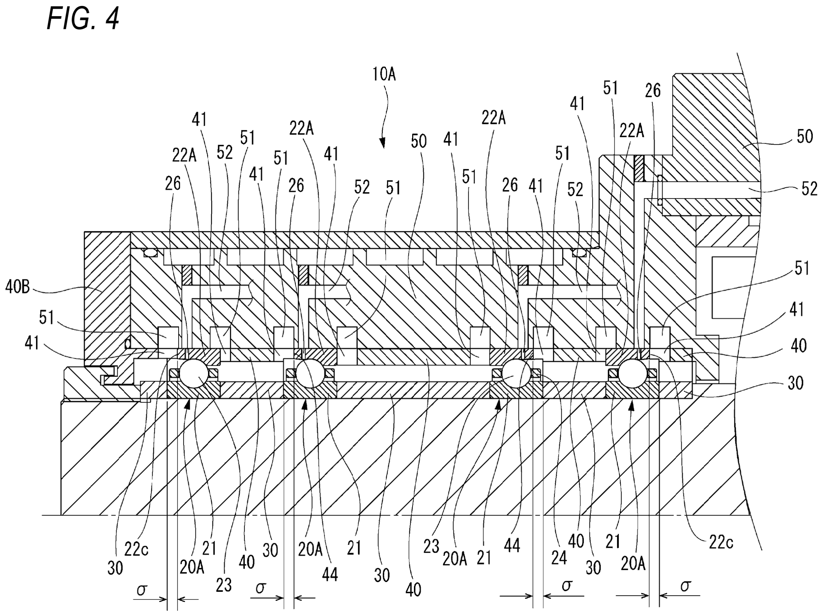

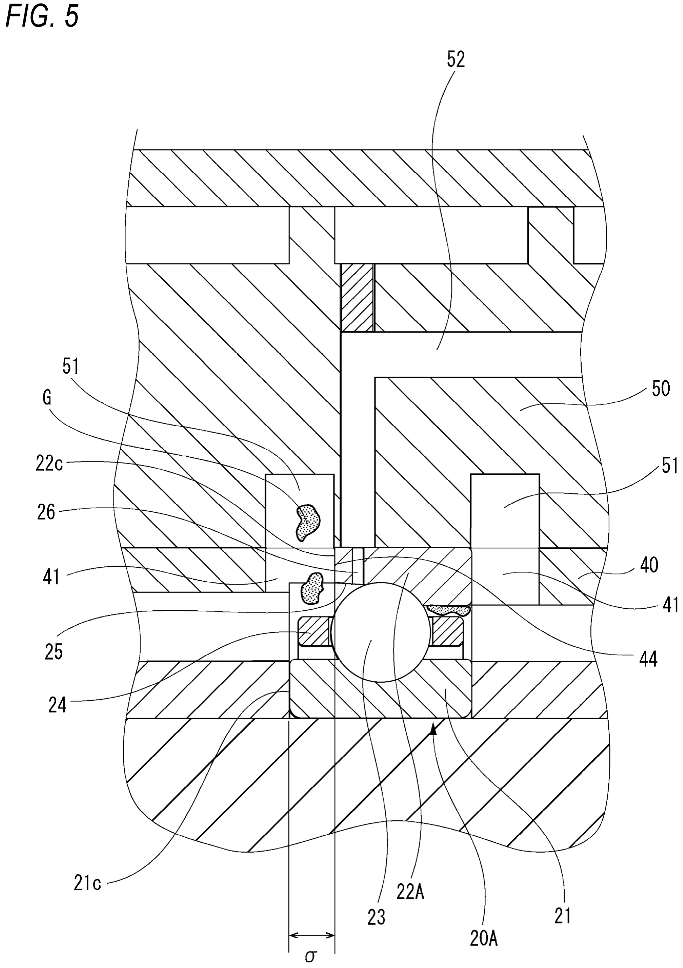

FIG. 4 is a cross-sectional view of a main part of a front bearing device 10A according to a second embodiment of the present invention. FIG. 5 is an enlarged cross-sectional view of a rolling bearing 20A illustrated in FIG. 4.

As illustrated in FIG. 4, the front bearing device 10A according to the second embodiment is a bearing device that includes the housing 50, the rolling bearing 20A, the outer ring spacer 40 and the outer ring retainer 40B that are outer ring positioning members, and the inner ring spacer 30, and supplies the lubricant G to an inside of the rolling bearing 20A via the lubricant supply path 52.

As illustrated in FIG. 5, each of four rolling bearings 20A combined in a back-to-back manner is an angular contact ball bearing, and includes the inner ring 21, an outer ring 22A, a plurality of balls 23 rollably disposed between the inner ring raceway surface 21a of the inner ring 21 and the outer ring raceway surface 22a of the outer ring 22A, and the cage 24. The outer ring 22A includes the tapered counter bore 25 at an inner peripheral surface on one side (left side in FIG. 5) in the axial direction with respect to the outer ring raceway surface 22a, and the oil supply hole 26 running through in the radial direction and opening to the counter bore 25 near the outer ring raceway surface 22a.

Further, in each rolling bearing 20A of the second embodiment, one side surface (axial end surface on the front surface side) 22c of the outer ring 22A is offset from a side surface (axial end surface on the front surface side) 21c of the inner ring 21 toward the axial center side by σ.

That is, in the rolling bearing 20A, axial positions of the axial end surfaces on the back surface side of the outer ring 22A and the inner ring 21 are the same, axial positions of the axial end surfaces on the front surface side of the outer ring 22A and the inner ring 21 are different, and a width of the outer ring 22A is shorter than a width of the inner ring 21. Accordingly, a bearing space between an outer peripheral surface of the inner ring 21 and the inner peripheral surface of the outer ring 22A is configured such that an axial front surface side thereof is opened to the radially outer side.

Further, the opening 41 running through the outer ring spacer 40 or the outer ring retainer 40B in the radial direction is formed at an end surface 44 of the outer ring spacer 40 and the outer ring retainer 40B abutting one side surface 22c of the offset outer ring 22A. The storage space 51 capable of storing the lubricant G discharged from the inside of the rolling bearing 20A is provided in the housing 50 on a radially outer side of the opening 41. Therefore, the bearing space of the rolling bearing 20A communicates with the storage space 51 via the opening 41 and a portion of the outer ring 22A on the axial front surface side that is opened to the radially outer side.

In the front bearing device 10A configured as described above, the lubricant G supplied from the lubricant supply unit 201 is supplied to the rolling bearing 20A via the lubricant supply path 52 and the oil supply hole 26 of the outer ring 22A. For example, when the lubricant G is grease, a predetermined amount of grease is periodically supplied at predetermined intervals. The lubricant G supplied to the inside of the rolling bearing 20A lubricates each part of the rolling bearing 20A, and a part thereof is retained inside the rolling bearing 20A. Of the lubricant G retained inside the rolling bearing 20A, the lubricant G that is unnecessary is pushed out to the outside of the rolling bearing 20A and discharged.

Further, a part of the lubricant G that is unnecessary is flicked off to a radially outer side of the rolling bearing 20A by a centrifugal force due to a rotational force of the inner ring 21 and the cage 24, and is forcibly and continuously discharged to the storage space 51 via the opening 41 and the portion opened to the radially outer side on the axial front surface side of the outer ring 22A, and is stored in the storage space 51.

That is, in the rolling bearing 20A, the one side surface 22c of the outer ring 22A is offset from the side surface 21c of the inner ring 21 toward the axial center side by σ, and the portion opened to the radially outer side on the axial front surface side of the outer ring 22A is formed. Therefore, the lubricant G retained inside the rolling bearing 20A can be quickly discharged to the opening 41, and the occurrence of an abnormal temperature rise due to the lubricant G reaching the inner ring raceway surface 21a and the outer ring raceway surface 22a of the rolling bearing 20A again can be restricted.

Therefore, similarly to the front bearing device 10 according to the first embodiment, according to the front bearing device 10A of the second embodiment, the lubricant G supplied to the inside of the rolling bearing 20A is flicked off to an outer diameter side from the portion opened to the radially outer side on the axial front surface side of the outer ring 22A by the action of the centrifugal force due to the rotational force of the inner ring 21 and the cage 24, and is stored in the storage space 51 via the opening 41. Accordingly, the stirring resistance of the lubricant G is reduced, heat generation is restricted, a favorable lubrication state is maintained, and as a result, the life of the rolling bearing 20A is extended. Since the magnitude of the centrifugal force that flicks off the lubricant G changes according to the rotational speed of the rolling bearing 20A, that is, the inner ring 21 and the cage 24, it is possible to appropriately supply the lubricant according to the rotational speed.

Since the axial back surface side of the outer ring 22A is not shortened toward the axial center side, the inner peripheral surface of the outer ring 22A can be used to guide the cage 24. Therefore, the guide type of the cage 24 of the second embodiment may be an outer ring guide type guided by the inner peripheral surface of the outer ring 22A in addition to the ball guide type and the inner ring guide type.

### (Third Embodiment)

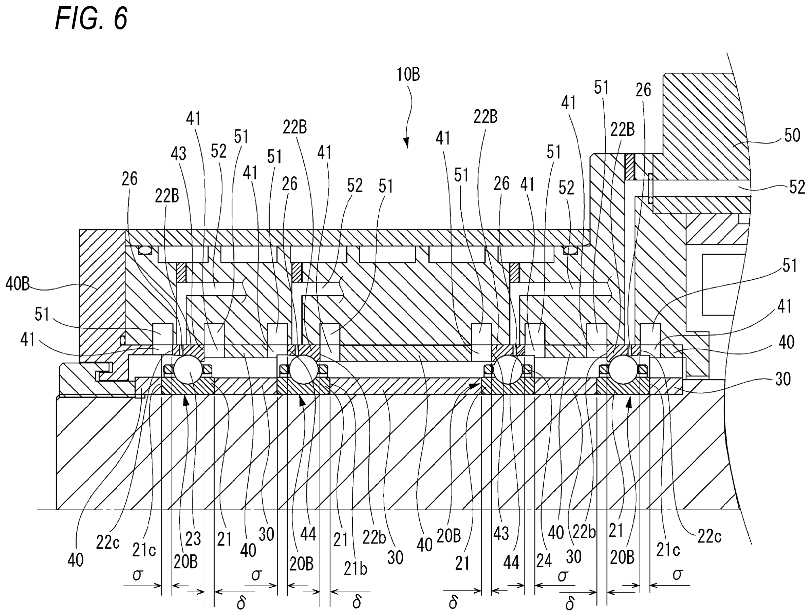

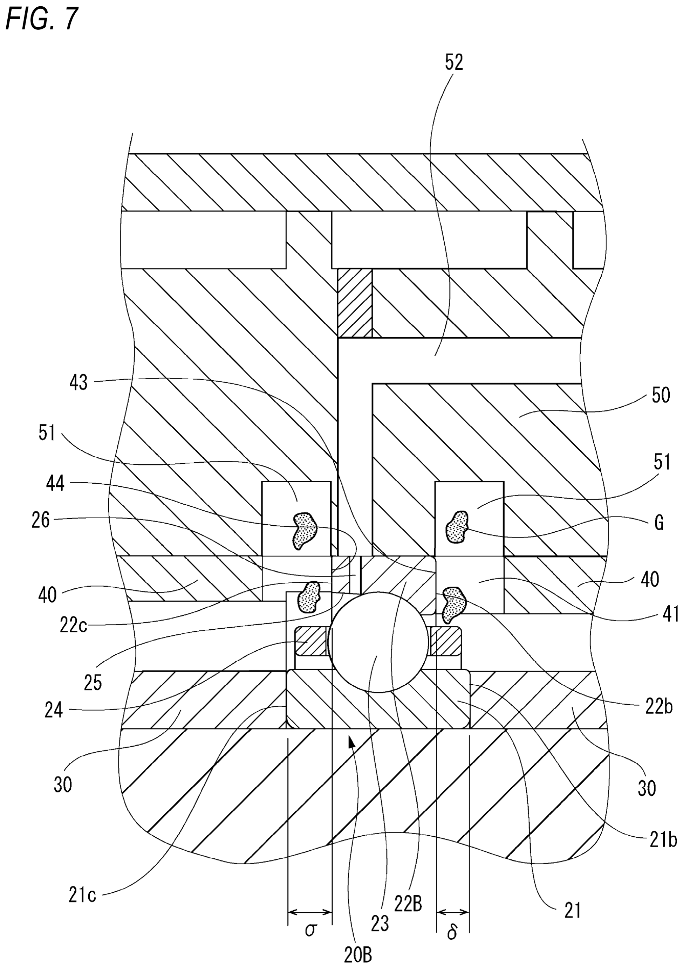

FIG. 6 is a cross-sectional view of a main part of a front bearing device 10B according to a third embodiment of the present invention. FIG. 7 is an enlarged cross-sectional view of a rolling bearing 20B illustrated in FIG. 6.

As illustrated in FIG. 6, the front bearing device 10B according to the third embodiment is a bearing device that includes the housing 50, the rolling bearing 20B, the outer ring spacer 40 and the outer ring retainer 40B that are outer ring positioning members, and the inner ring spacer 30, and supplies the lubricant G to an inside of the rolling bearing 20B via the lubricant supply path 52.

As illustrated in FIG. 7, each of four rolling bearings 20B combined in a back-to-back manner is an angular contact ball bearing, and includes the inner ring 21, an outer ring 22B, a plurality of balls 23 rollably disposed between the inner ring raceway surface 21a of the inner ring 21 and the outer ring raceway surface 22a of the outer ring 22B, and the cage 24. The outer ring 22B includes the tapered counter bore 25 at an inner peripheral surface on one side in the axial direction with respect to the outer ring raceway surface 22a, and the oil supply hole 26 running through in the radial direction and opening to the counter bore 25 near the outer ring raceway surface 22a.

Further, in each rolling bearing 20B of the third embodiment, both side surfaces 22b and 22c of the outer ring 22B are offset from both side surfaces 21b and 21c of the inner ring 21 toward the axial center side by dimensions δ and σ, respectively.

That is, in the rolling bearing 20B, axial positions of the axial end surfaces on the back surface side and the front surface side of the outer ring 22B and the inner ring 21 are different, and a width of the outer ring 22B is shorter than a width of the inner ring 21. Accordingly, a bearing space between an outer peripheral surface of the inner ring 21 and the inner peripheral surface of the outer ring 22B is configured such that the axial back surface side and the axial front surface side thereof are opened to the radially outer side.

Further, openings 41 that run through the outer ring spacer 40 or the outer ring retainer 40B in the radial direction are formed at the end surfaces 43 and 44 of the outer ring spacer 40 and the outer ring retainer 40B that abut both side surfaces 22b and 22c of the offset outer ring 22B. The storage space 51 capable of storing the lubricant G discharged from the inside of the rolling bearing 20A is provided in the housing 50 on a radially outer side of the opening 41. Therefore, the bearing space of the rolling bearing 20B communicates with the respective storage spaces 51 via the openings 41 and the portions opened to the radially outer side on the axial back surface side and the axial front surface side of the outer ring 22A.

In the front bearing device 10B configured as described above, the lubricant G supplied from the lubricant supply unit 201 is supplied to the rolling bearing 20B via the lubricant supply path 52 and the oil supply hole 26 of the outer ring 22B. For example, when the lubricant G is grease, a predetermined amount of grease is periodically supplied at predetermined intervals. The lubricant G supplied to the inside of the rolling bearing 20B lubricates each part of the rolling bearing 20B, and a part thereof is retained inside the rolling bearing 20B. Of the lubricant G retained inside the rolling bearing 20B, the lubricant G that is unnecessary is pushed out to the outside of the rolling bearing 20B and discharged.

Further, a part of the lubricant G that is unnecessary is flicked off to a radially outer side of the rolling bearing 20B by the centrifugal force due to the rotational force of the inner ring 21 and the cage 24, is forcibly and continuously discharged to the storage spaces 51 via the openings 41 and the portions opened to the radially outer side on the axial back surface side and the axial front surface side of the outer ring 22B, and is stored in the storage spaces 51.

That is, in the rolling bearing 20B, both side surfaces 22b and 22c of the outer ring 22B are offset from both side surfaces 21b and 21c of the inner ring 21 toward the axial center side by the dimensions δ and σ, respectively, and the portions opened to the radially outer side on the axial back surface side and the axial front surface side of the outer ring 22B are formed. Therefore, the lubricant G retained inside the rolling bearing 20B can be quickly discharged to the opening 41, and the occurrence of an abnormal temperature rise due to the lubricant G reaching the inner ring raceway surface 21a and the outer ring raceway surface 22a of the rolling bearing 20B again can be restricted.

Therefore, similarly to the front bearing device 10 according to the first embodiment, according to the front bearing device 10B of the third embodiment, the lubricant G supplied to the inside of the rolling bearing 20B is flicked off to an outer diameter side from the portions opened to the radially outer side on the axial back surface side and the axial front surface side of the outer ring 22B by the action of the centrifugal force due to the rotational force of the inner ring 21 and the cage 24, and is stored in the storage spaces 51 via the openings 41. Accordingly, the stirring resistance of the lubricant G is reduced, heat generation is restricted, a favorable lubrication state is maintained, and as a result, the life of the rolling bearing 20B is extended. Since the magnitude of the centrifugal force that flicks off the lubricant G changes according to the rotational speed of the rolling bearing 20B, that is, the inner ring 21 and the cage 24, it is possible to appropriately supply the lubricant according to the rotational speed.

The outer ring 22B is shortened toward the axial center side on the axial back surface side and the axial front surface side, and it is difficult to guide the cage 24 by the inner peripheral surface of the outer ring 22B. Therefore, the guide type of the cage 24 of the third embodiment is a ball guide type or an inner ring guide type.

In the front bearing devices 10, 10A and 10B according to the first to third embodiments, the offset dimensions δ and σ in the four rolling bearings 20, 20A and 20B combined in a back-to-back manner are all set to be the same, but when a level of abnormal temperature rise varies depending on the arrangement of the rolling bearings, the offset dimensions δ and σ may be appropriately changed.

For example, in a case where, in the four rolling bearings combined in a back-to-back manner, abnormal temperature rises in the first row and the fourth row are likely to occur and abnormal temperature rises in the second row and the third row are rare, the offset dimensions δ and σ in the rolling bearings 20, 20A and 20B in the first row and the fourth row can be made greater than the offset dimensions δ and σ in the rolling bearings 20, 20A and 20B in the second row and the third row.

In addition, one or more rolling bearings among the plurality of rolling bearings may be provided with the offset dimension δ (or σ), or the offset dimension δ (or σ) of one or more rolling bearings among the plurality of rolling bearings may be changed with respect to the offset dimension δ (or σ) of the remaining rolling bearings.

### (Modification of Rolling Bearing)

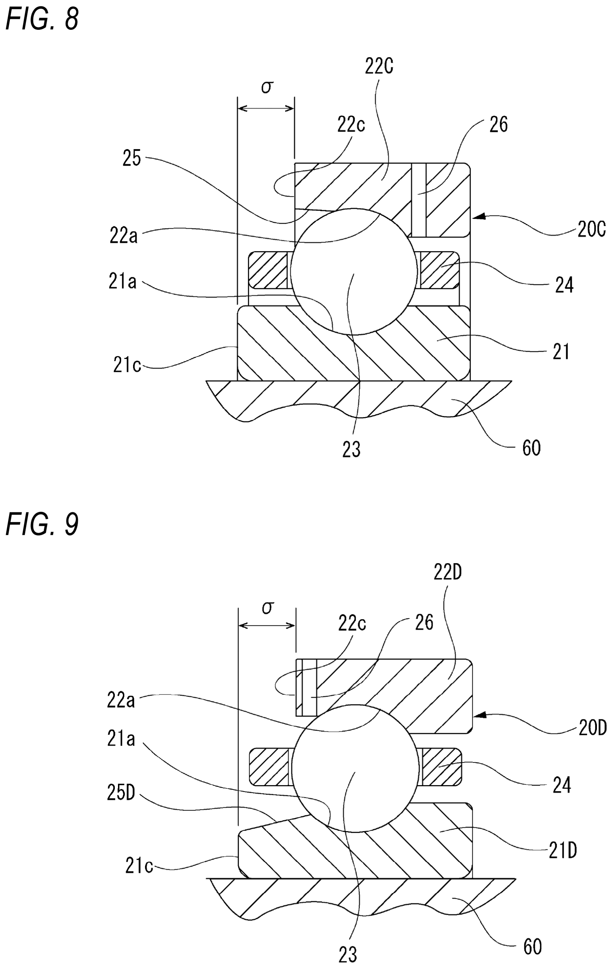

FIG. 8 is an enlarged cross-sectional view of a rolling bearing 20C according to a first modification. FIG. 9 is an enlarged cross-sectional view of a rolling bearing 20D according to a second modification.

As illustrated in FIG. 8, an outer ring 22C of the rolling bearing 20C according to the first modification includes the tapered counter bore 25 at an inner peripheral surface on one side (left side in FIG. 8) in the axial direction with respect to the outer ring raceway surface 22a, and the oil supply hole 26 running through in the radial direction and opening in the inner peripheral surface on the other side (right side in FIG. 8) in the axial direction near the outer ring raceway surface 22a.

In the rolling bearing 20C, one side surface (axial end surface on the front surface side) 22c of the outer ring 22C is offset from the side surface (axial end surface on the front surface side) 21c of the inner ring 21 toward the axial center side by σ. That is, in the rolling bearing 20C, axial positions of the axial end surfaces on the back surface side (right side in FIG. 8) of the outer ring 22C and the inner ring 21 are the same, axial positions of the axial end surfaces on the front surface side (left side in FIG. 8) of the outer ring 22C and the inner ring 21 are different, and a width of the outer ring 22C is shorter than a width of the inner ring 21. Accordingly, a bearing space between the outer peripheral surface of the inner ring 21 and the inner peripheral surface of the outer ring 22C is configured such that the axial front surface side is opened to the radially outer side.

In the rolling bearing 20C according to the first modification, the oil supply hole 26 for supplying the lubricant G is provided on the back surface side of the outer ring 22C. Therefore, the lubricant G supplied to an inside of the rolling bearing 20C from the oil supply hole 26 provided on the back surface side of the outer ring 22C lubricates each part of the rolling bearing 20C, and a part thereof is retained inside the rolling bearing 20C. Of the lubricant G retained inside the rolling bearing 20C, a part of the lubricant G that is unnecessary is flicked off to a radially outer side of the rolling bearing 20C from a portion provided on the front surface side of the outer ring 22C and opened to the radially outer side, and is discharged to the opening 41.

The outer ring 22C is provided with the oil supply hole 26 on the axial back surface side, and it is difficult to guide the cage 24 by the inner peripheral surface of the outer ring 22C. Therefore, the guide type of the cage 24 of the first modification is a ball guide type or an inner ring guide type.

As illustrated in FIG. 9, in the rolling bearing 20D according to the second modification, an inner ring 21D includes a tapered counter bore 25D at an inner peripheral surface on one side (left side in FIG. 9) in the axial direction with respect to the inner ring raceway surface 21a, and an outer ring 22D includes the oil supply hole 26 running through in the radial direction and opening in the inner peripheral surface on one side in the axial direction near the outer ring raceway surface 22a.

Further, in the rolling bearing 20D, one side surface (axial end surface on the back surface side) 22c of the outer ring 22D is offset from the side surface (axial end surface on the back surface side) 21c of the inner ring 21D toward the axial center side by σ. That is, in the rolling bearing 20D, axial positions of the axial end surfaces on the front surface side (right side in FIG. 9) of the outer ring 22D and the inner ring 21D are the same, axial positions of the axial end surfaces on the back surface side (left side in FIG. 9) of the outer ring 22D and the inner ring 21D are different, and a width of the outer ring 22D is shorter than a width of the inner ring 21D. Accordingly, a bearing space between an outer peripheral surface of the inner ring 21D and an inner peripheral surface of the outer ring 22D is configured such that the axial back surface side is opened to the radially outer side.

In the rolling bearing 20D according to the second modification, the counter bore 25D is provided at the inner ring 21D.

Since the axial front surface side of the outer ring 22D is not shortened toward the axial center side, the inner peripheral surface of the outer ring 22D can be used to guide the cage 24. Therefore, the guide type of the cage 24 of the second modification may be an outer ring guide type in addition to a ball guide type and an inner ring guide type.

### (Outer Ring Positioning Member)

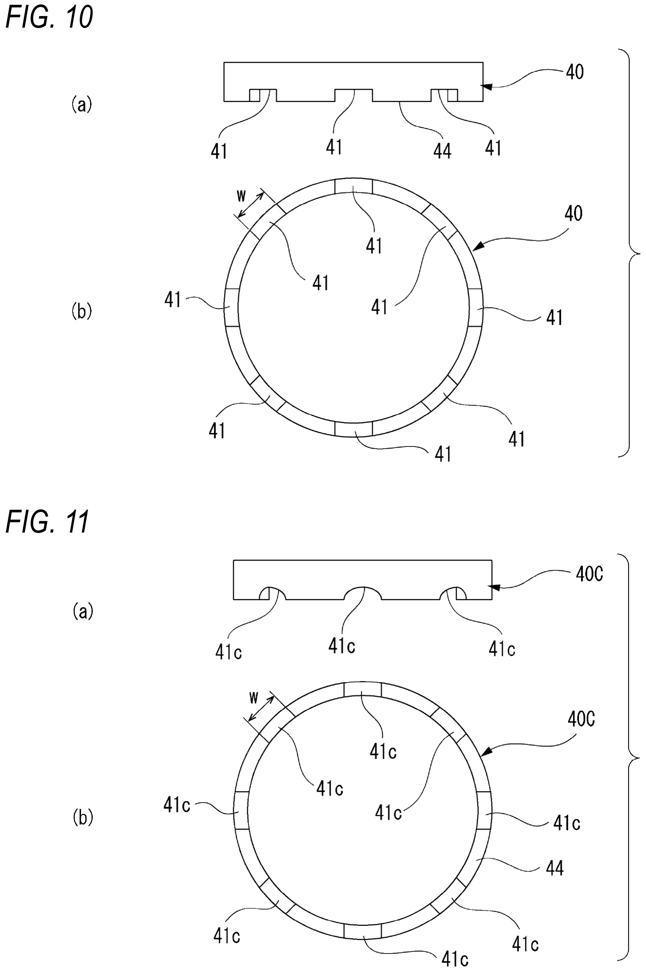

As illustrated in Sections (a) and (b) of FIG. 10, the outer ring spacer 40 as the outer ring positioning member in the bearing device according to the present embodiment is formed in an annular shape fitted into the housing 50.

In the outer ring spacer 40, a part in a circumferential direction is cut out in a rectangular shape in the axial direction from the end surface 44 abutting the side surface of the outer ring 22, so that a plurality of (eight in the present embodiment) openings 41 running through in the radial direction are formed, each with a circumferential width w. Although a plurality of openings 41 of the outer ring spacer 40 are preferably formed at equal intervals in the circumferential direction, it is sufficient that at least one opening 41 is provided.

Further, as in an outer ring spacer 40C illustrated in Sections (a) and (b) of FIG. 11, an opening 41c running through in the radial direction can be formed in a semicircular shape. The opening of the present embodiment is not limited to the rectangular shape or the semicircular shape, and various opening shapes can be adopted as long as the lubricant flicked off to the outer diameter side from the portion opened to the radially outer side on at least one axial end surface side of the outer ring can be discharged.

The outer ring positioning member in the bearing device of the present embodiment also includes the outer ring retainer 40B that is bolted to the front side of the housing 50. Therefore, the end surface 44 of the outer ring retainer 40B abutting the side surface of the outer ring 22 is also cut out in a rectangular shape in the axial direction to form a plurality of openings 41 running through in the radial direction.

### (Fourth Embodiment)

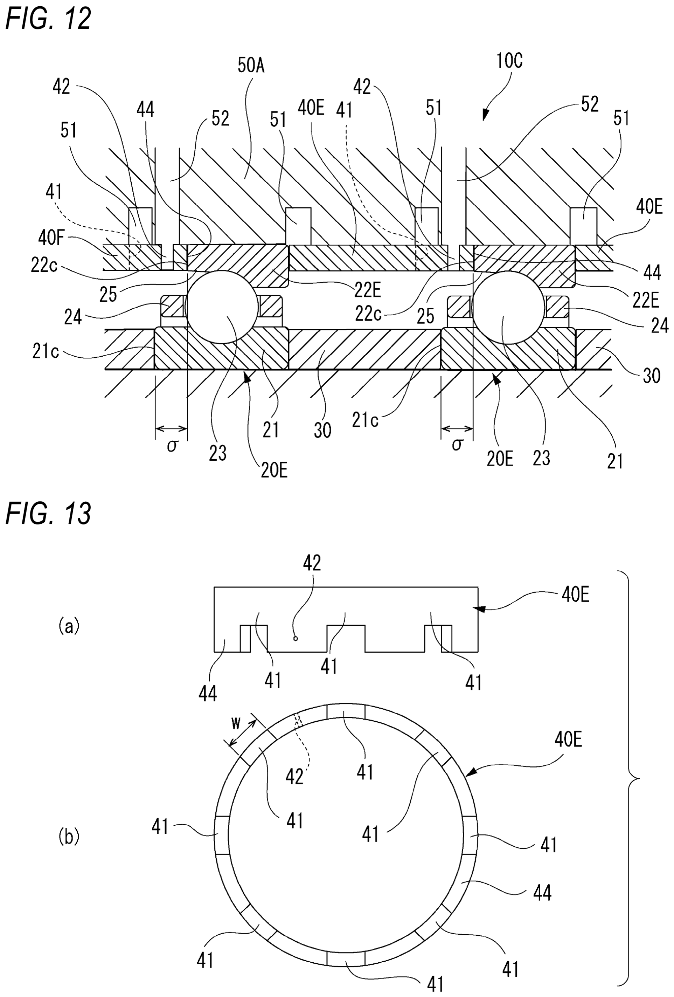

FIG. 12 is an enlarged cross-sectional view of a main part of a front bearing device 10C according to a fourth embodiment of the present invention. Sections (a) and (b) of FIG. 13 are a top view and a front view of an outer ring spacer 40E illustrated in FIG. 12.

As illustrated in FIG. 12, the front bearing device 10C according to the fourth embodiment includes a housing 50A, a rolling bearing 20E that rotatably supports the spindle 60 with respect to the housing 50A, the outer ring spacer 40E and an outer ring retainer 40F that are outer ring positioning members fitted into the housing 50A to position an outer ring 22E of the rolling bearing 20E in the axial direction, and the inner ring spacer 30 that is fitted onto the spindle 60 to position the inner ring 21 of the rolling bearing 20E in the axial direction. The front bearing device 10C supplies the lubricant G to an inside of the rolling bearing 20E via the lubricant supply path 52.

The rolling bearing 20E is an angular contact ball bearing, and includes the inner ring 21, the outer ring 22E, a plurality of balls 23 that are rolling elements rollably disposed between the inner ring raceway surface 21a of the inner ring 21 and the outer ring raceway surface 22a of the outer ring 22E, and the cage 24 that rotatably holds the plurality of balls 23.

The outer ring 22E includes the tapered counter bore 25 at an inner peripheral surface on one side (left side in FIG. 12) in the axial direction with respect to the outer ring raceway surface 22a. One side surface (axial end surface on the front surface side) 22c of the outer ring 22E is offset from the side surface (axial end surface on the front surface side) 21c of the inner ring 21 toward the axial center side by σ.

That is, in the rolling bearing 20E, axial positions of the axial end surfaces on the back surface side of the outer ring 22E and the inner ring 21 are the same, axial positions of the axial end surfaces on the front surface side of the outer ring 22E and the inner ring 21 are different, and a width of the outer ring 22E is shorter than a width of the inner ring 21. Accordingly, a bearing space between an outer peripheral surface of the inner ring 21 and the inner peripheral surface of the outer ring 22E is configured such that an axial front surface side thereof is opened to a radially outer side.

Further, as illustrated in FIG. 13, the opening 41 running through the outer ring spacer 40E (outer ring retainer 40F) in the radial direction is formed in the end surface 44 of the outer ring spacer 40E (outer ring retainer 40F) abutting one side surface 22c of the offset outer ring 22E. The outer ring spacer 40E (outer ring retainer 40F) includes an oil supply hole 42 running through in the radial direction and opening near the counter bore 25.

In the front bearing device 10C configured as described above, the lubricant G formed of grease supplied from the lubricant supply unit 201 is supplied to the rolling bearing 20E via the lubricant supply path 52 and the oil supply hole 42 of the outer ring spacer 40E.

The lubricant G supplied to the inside of the rolling bearing 20E lubricates each part of the rolling bearing 20E, and a part thereof is retained inside the rolling bearing 20E. Of the lubricant G retained inside the rolling bearing 20E, the lubricant G that is unnecessary is pushed out to the outside of the rolling bearing 20E and discharged.

Further, a part of the lubricant G that is unnecessary is flicked off to a radially outer side of the rolling bearing 20E by a centrifugal force due to a rotational force of the inner ring 21 and the cage 24, and is forcibly and continuously discharged to the storage space 51 via the opening 41 and a portion opened to the radially outer side on the axial front surface side of the outer ring 22E, and is stored in the storage space 51.

That is, in the rolling bearing 20E, the one side surface 22c of the outer ring 22E is offset from the side surface 21c of the inner ring 21 toward the axial center side by the dimension σ, and the portion opened to the radially outer side on the axial front surface side of the outer ring 22E is formed. Therefore, the lubricant G retained inside the rolling bearing 20E can be quickly discharged to the opening 41, and the occurrence of an abnormal temperature rise due to the lubricant G reaching the inner ring raceway surface 21a and the outer ring raceway surface 22a of the rolling bearing 20E again can be restricted.

Therefore, similarly to the front bearing device 10 according to the first embodiment, according to the front bearing device 10C of the fourth embodiment, the lubricant G supplied to the inside of the rolling bearing 20E is flicked off to an outer diameter side from the portion opened to the radially outer side on the axial front surface side of the outer ring 22E by the action of the centrifugal force due to the rotational force of the inner ring 21 and the cage 24, and is stored in each storage space 51 via the opening 41. Accordingly, the stirring resistance of the lubricant G is reduced, heat generation is restricted, a favorable lubrication state is maintained, and as a result, the life of the rolling bearing 20E is extended.

Since the axial back surface side of the outer ring 22E is not shortened toward the axial center side, the inner peripheral surface of the outer ring 22E can be used to guide the cage 24. Therefore, the guide type of the cage 24 of the fourth embodiment may be an outer ring guide type in addition to a ball guide type and an inner ring guide type.

### (Fifth Embodiment)

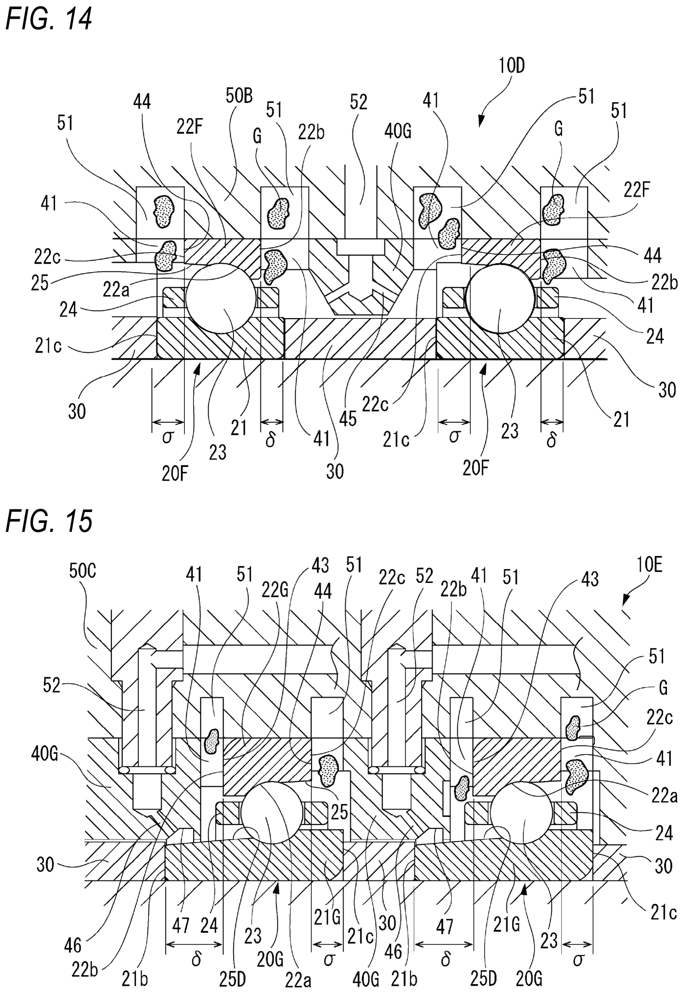

FIG. 14 is an enlarged cross-sectional view of a main part of a front bearing device 10D according to a fifth embodiment of the present invention.

As illustrated in FIG. 14, a front bearing device 10D according to the fifth embodiment is a bearing device that includes a housing 50B, a rolling bearing 20F, outer ring spacers 40 and 40G that are outer ring positioning members, and the inner ring spacer 30, and supplies the lubricant G to an inside of the rolling bearing 20F via the lubricant supply path 52.

The rolling bearing 20F is an angular contact ball bearing, and includes the inner ring 21, an outer ring 22F, a plurality of balls 23 that are rolling elements rollably disposed between the inner ring raceway surface 21a of the inner ring 21 and the outer ring raceway surface 22a of the outer ring 22F, and the cage 24 that rotatably holds the plurality of balls 23.

The outer ring 22F includes the tapered counter bore 25 at an inner peripheral surface on one side (left side in FIG. 14) in the axial direction with respect to the outer ring raceway surface 22a. Both side surfaces 22b and 22c of the outer ring 22F are offset from both side surfaces 21b and 21c of the inner ring 21 toward the axial center side by dimensions δ and σ, respectively.

That is, in the rolling bearing 20F, axial positions of the axial end surfaces on the back surface side and the front surface side of the outer ring 22F and the inner ring 21 are different, and a width of the outer ring 22F is shorter than a width of the inner ring 21. Accordingly, a bearing space between an outer peripheral surface of the inner ring 21 and the inner peripheral surface of the outer ring 22F is configured such that the axial back surface side and the axial front surface side thereof are opened to a radially outer side.

Further, openings 41 that run through the outer ring spacer 40G in the radial direction are formed at the end surfaces 43 and 44 of the outer ring spacer 40G that abut both side surfaces 22b and 22c of the offset outer ring 22F. Further, an oil supply hole 45 for supplying the lubricant G from a side surface of the adjacent rolling bearing 20F is provided in an axially central portion of the outer ring spacer 40G.

In the front bearing device 10D configured as described above, the lubricant G formed of oil air supplied from the lubricant supply unit 201 is supplied to the rolling bearing 20F via the lubricant supply path 52 and the oil supply hole 45 of the outer ring spacer 40G.

The lubricant G supplied to the inside of the rolling bearing 20F lubricates each part of the rolling bearing 20F, and a part thereof is retained inside the rolling bearing 20F. Of the lubricant G retained inside the rolling bearing 20F, the lubricant G that is unnecessary is pushed out to the outside of the rolling bearing 20F and discharged.

Further, a part of the lubricant G that is unnecessary is flicked off to a radially outer side of the rolling bearing 20F by the centrifugal force due to the rotational force of the inner ring 21 and the cage 24, is forcibly and continuously discharged to the storage spaces 51 via the openings 41 and portions opened to the radially outer side on the axial back surface side and the axial front surface side of the outer ring 22F, and is stored in the storage spaces 51.

That is, in the rolling bearing 20F, both side surfaces 22b and 22c of the outer ring 22F are offset from both side surfaces 21b and 21c of the inner ring 21 toward the axial center side by the dimensions δ and σ, respectively, and the portions opened to the radially outer side on the axial back surface side and the axial front surface side of the outer ring 22F are formed. Therefore, the lubricant G retained inside the rolling bearing 20F can be quickly discharged to the opening 41, and the occurrence of an abnormal temperature rise due to the lubricant G reaching the inner ring raceway surface 21a and the outer ring raceway surface 22a of the rolling bearing 20F again can be restricted.

Therefore, similarly to the front bearing device 10 according to the first embodiment, according to the front bearing device 10D of the fifth embodiment, the lubricant G supplied to the inside of the rolling bearing 20F is flicked off to an outer diameter side from the portions opened to the radially outer side on the axial back surface side and the axial front surface side of the outer ring 22F by the action of the centrifugal force due to the rotational force of the inner ring 21 and the cage 24, and is stored in the storage spaces 51 via the openings 41. Accordingly, the stirring resistance of the lubricant G is reduced, heat generation is restricted, a favorable lubrication state is maintained, and as a result, the life of the rolling bearing 20F is extended.

The outer ring 22F is shortened toward the axial center side on the axial back surface side and the axial front surface side, and it is difficult to guide the cage 24 by the inner peripheral surface of the outer ring 22F. Therefore, the guide type of the cage 24 of the fifth embodiment is a ball guide type or an inner ring guide type.

### (Sixth Embodiment)

FIG. 15 is an enlarged cross-sectional view of a main part of a front bearing device 10E according to a sixth embodiment of the present invention.

As illustrated in FIG. 15, the front bearing device 10E according to the sixth embodiment is a bearing device that includes a housing 50C, a rolling bearing 20G, the outer ring spacer 40G that is an outer ring positioning member, and the inner ring spacer 30, and supplies the lubricant G to an inside of the rolling bearing 20G via the lubricant supply path 52.

Each rolling bearing 20G is an angular contact ball bearing, and includes an inner ring 21G, an outer ring 22G, a plurality of balls 23 rollably disposed between the inner ring raceway surface 21a of the inner ring 21G and the outer ring raceway surface 22a of the outer ring 22F, and the cage 24.

The outer ring 22G includes the tapered counter bore 25 at an inner peripheral surface on the other side (right side in FIG. 15) in the axial direction with respect to the outer ring raceway surface 22a. The side surface 22c of the outer ring 22G is offset from the side surface 21c of the inner ring 21G toward the axial center side by the dimension σ. The side surface 22b of the outer ring 22G is offset from the side surface 21b of the inner ring 21G, which extends toward the back surface side (left side in FIG. 15) so as to face a circumferential groove 47 formed in the inner peripheral surface of the outer ring spacer 40G described later, toward the axial center side by the dimension δ.

That is, in the rolling bearing 20G, axial positions of the axial end surfaces on the back surface side and the front surface side of the outer ring 22G and the inner ring 21G are different, and a width of the outer ring 22G is shorter than a width of the inner ring 21G. Accordingly, a bearing space between an outer peripheral surface of the inner ring 21G and the inner peripheral surface of the outer ring 22G is configured such that the axial back surface side and the axial front surface side thereof are opened to a radially outer side.

Further, openings 41 that run through the outer ring spacer 40G in the radial direction are formed at the end surfaces 43 and 44 of the outer ring spacer 40G that abut both side surfaces 22b and 22c of the offset outer ring 22F. An oil supply hole 46 for supplying the lubricant G to the outer peripheral surface of the inner ring 21G of the adjacent rolling bearing 20G and the circumferential groove 47 communicating with the oil supply hole 46 are provided in an axially central portion of the outer ring spacer 40G. The circumferential groove 47 is formed in the inner peripheral surface of the outer ring spacer 40G so as to face an extending portion of the inner ring 21G.

In the front bearing device 10E configured as described above, the lubricant G formed of oil air supplied from the lubricant supply unit 201 is supplied to the outer peripheral surface of the inner ring 21G via the lubricant supply path 52, the oil supply hole 46 of the outer ring spacer 40G, and the circumferential groove 47.

The lubricant G supplied from the outer peripheral surface of the inner ring 21G to the inside of the rolling bearing 20G lubricates each part of the rolling bearing 20G, and a part thereof is retained inside the rolling bearing 20G. Of the lubricant G retained inside the rolling bearing 20G, the lubricant G that is unnecessary is pushed out to the outside of the rolling bearing 20G and discharged.

Further, a part of the lubricant G that is unnecessary is flicked off to a radially outer side of the rolling bearing 20G by the centrifugal force due to the rotational force of the inner ring 21G and the cage 24, is forcibly and continuously discharged to the storage spaces 51 via the openings 41 and portions opened to the radially outer side on the axial back surface side and the axial front surface side of the outer ring 22G, and is stored in the storage spaces 51.

That is, in the rolling bearing 20G, both side surfaces 22b and 22c of the outer ring 22G are offset from both side surfaces 21b and 21c of the inner ring 21G toward the axial center side by the dimensions δ and σ, respectively, and the portions opened to the radially outer side on the axial back surface side and the axial front surface side of the outer ring 22G are formed. Therefore, the lubricant G retained inside the rolling bearing 20G can be quickly discharged to the opening 41, and the occurrence of an abnormal temperature rise due to the lubricant G reaching the inner ring raceway surface 21a and the outer ring raceway surface 22a of the rolling bearing 20G again can be restricted.

Therefore, similarly to the front bearing device 10 according to the first embodiment, according to the front bearing device 10E of the sixth embodiment, the lubricant G supplied to the inside of the rolling bearing 20G is flicked off to an outer diameter side from the portions opened to the radially outer side on the axial back surface side and the axial front surface side of the outer ring 22G by the action of the centrifugal force due to the rotational force of the inner ring 21G and the cage 24, and is stored in the storage spaces 51 via the openings 41. Accordingly, the stirring resistance of the lubricant G is reduced, heat generation is restricted, a favorable lubrication state is maintained, and as a result, the life of the rolling bearing 20G is extended.

The outer ring 22G is shortened toward the axial center side on the axial back surface side and the axial front surface side, and it is difficult to guide the cage 24 by the inner peripheral surface of the outer ring 22G. Therefore, the guide type of the cage 24 of the sixth embodiment is a ball guide type or an inner ring guide type.

### (Seventh Embodiment)

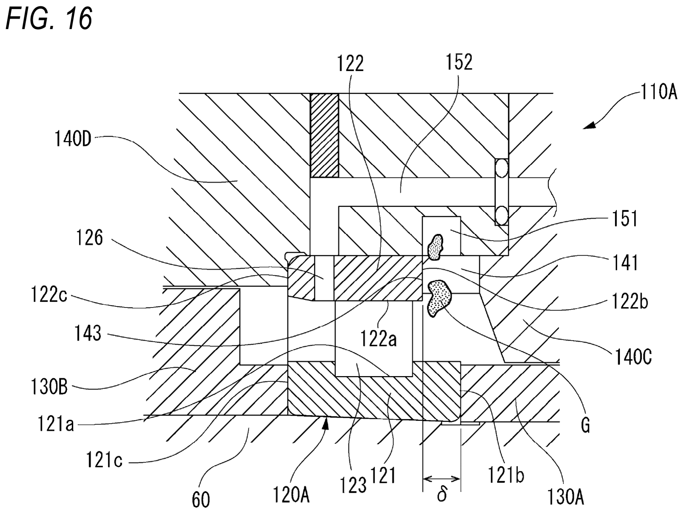

FIG. 16 is an enlarged cross-sectional view of a rear bearing device 110A according to a seventh embodiment of the present invention.

As illustrated in FIG. 16, the rear bearing device 110A according to the seventh embodiment includes a rolling bearing 120A that rotatably supports the spindle 60 with respect to the housing 50, outer ring retainers 140C and 140D that are outer ring positioning members, and inner ring spacers 130A and 130B, and supplies the lubricant G to an inside of the rolling bearing 120A via a lubricant supply path 152.

The rolling bearing 120A is a cylindrical roller bearing, and includes a double-flanged inner ring 121, an outer ring 122 without flange, a plurality of rollers 123 that are rolling elements rollably disposed between an inner ring raceway surface 121a of the inner ring 121 and an outer ring raceway surface 122a of the outer ring 122, and a cage (not illustrated). The outer ring 122 includes the oil supply hole 126 running through in the radial direction and opening at a front portion of an inner peripheral surface of the outer ring 122.

In the rolling bearing 120A of the seventh embodiment, one side surface (axial end surface on a rear side) 122b of the outer ring 122 is offset from a side surface 121b of the inner ring 121 toward the axial center side by the dimension δ.

That is, in the rolling bearing 120A, axial positions of the axial end surfaces on a front side of the outer ring 122 and the inner ring 121 are the same, axial positions of the axial end surfaces on the rear side of the outer ring 122 and the inner ring 121 are different, and a width of the outer ring 122 is shorter than a width of the inner ring 121. Accordingly, a bearing space between an outer peripheral surface of the inner ring 121 and the inner peripheral surface of the outer ring 122 is configured such that an axial rear side (right side in FIG. 16) is opened to radially outer side.

Further, an opening (drain hole) 141 running through the outer ring retainer 140C in the radial direction is formed at an end surface 143 of the outer ring retainer 140C abutting the one side surface 122b of the offset outer ring 122. A storage space 151 capable of storing the lubricant G discharged from the inside of the rolling bearing 120A is provided in the outer ring retainer 140D on a radially outer side of the opening 141.

The storage space 151 is an annular space formed on an outer peripheral side of the opening 141. Therefore, the bearing space of the rolling bearing 120A communicates with the storage space 151 via the opening 141 and a portion opened to the radially outer side on the axial rear side of the outer ring 122.

In the rear bearing device 110A configured as described above, the lubricant G supplied from the lubricant supply unit 201 is supplied to the rolling bearing 120A via the lubricant supply path 152 and the oil supply hole 126 of the outer ring 122. For example, when the lubricant G is grease, a predetermined amount of grease is periodically supplied at predetermined intervals. The lubricant G supplied to the inside of the rolling bearing 120A lubricates each part of the rolling bearing 120A, and a part thereof is retained inside the rolling bearing 120A. Of the lubricant G retained inside the rolling bearing 120A, the lubricant G that is unnecessary is pushed out to the outside of the rolling bearing 120A and discharged.

Further, a part of the lubricant G that is unnecessary is flicked off to a radially outer side of the rolling bearing 120A by a centrifugal force due to a rotational force of the inner ring 121 and the cage, is forcibly and continuously discharged to the storage space 151 via the opening 141 and the portion opened to the radially outer side on the axial rear side of the outer ring 122, and is stored in the storage space 151.

That is, in the rolling bearing 120A, the one side surface 122b of the outer ring 122 is offset from the side surface 121b of the inner ring 121 toward the axial center side by δ, and the portion opened to the radially outer side on the axial rear side of the outer ring 122 is formed. Therefore, the lubricant G retained inside the rolling bearing 120A can be quickly discharged to the opening 141, and the occurrence of an abnormal temperature rise due to the lubricant G reaching the inner ring raceway surface 121a and the outer ring raceway surface 122a of the rolling bearing 120A again can be restricted.

Therefore, similarly to the front bearing device 10 according to the first embodiment, according to the rear bearing device 110A of the seventh embodiment, the lubricant G supplied to the inside of the rolling bearing 120A is flicked off to an outer diameter side from the portion opened to the radially outer side on the axial rear side of the outer ring 122 by the action of the centrifugal force due to the rotational force of the inner ring 121 and the cage, and is stored in the storage space 151 via the opening 141. Accordingly, the stirring resistance of the lubricant G is reduced, heat generation is restricted, a favorable lubrication state is maintained, and as a result, the life of the rolling bearing 120A is extended. Since the magnitude of the centrifugal force that flicks off the lubricant G changes according to the rotational speed of the rolling bearing 120A, that is, the inner ring 121 and the cage, it is possible to appropriately supply the lubricant according to the rotational speed.

Similarly to the rolling bearings in the above-described embodiments, it is needless to say that appropriate modifications can be made such as offsetting both side surfaces 122b and 122c of the outer ring 122 in the rolling bearing 120A from both side surfaces 121b and 121c of the inner ring 121 toward the axial center side by dimensions δ and σ, opening the oil supply hole 126 of the outer ring 122 to the front side of the outer ring 122, or changing a oil supply structure of the lubricant G to the rolling bearing 120A.

The present invention is not limited to the above-described embodiments, and can be appropriately modified, improved, or the like. Further, a material, a shape, a size, the number of, an arrangement position, and the like of each component in the above-described embodiments can be freely set and are not limited as long as the present invention can be achieved.

Here, features of the embodiments of the bearing device and the spindle device according to the present invention described above will be briefly summarized and listed in the following [1] to [4].
[1] A bearing device (front bearing devices 10, 10A, 10B, 10C, 10D, and 10E, and rear bearing device 110A) including:
   a housing (50, 50A, 50B, 50C),
   a rolling bearing (20, 20A, 20B, 20C, 20D, 20E, 20F, 20G, 120A) that rotatably supports a spindle (60) with respect to the housing; and
   an outer ring positioning member (outer ring spacer 40, outer ring retainers 40B and 140C) that is fitted into the housing and positions an outer ring (22, 22A, 22B, 22C, 22D, 22E, 22F, 22G, 122) of the rolling bearing in an axial direction, in which
   a lubricant (G) is supplied to an inside of the rolling bearing via a lubricant supply path (52, 152),
   at least one side surface (22b) of the outer ring is offset from a side surface (21b) of an inner ring (21) of the rolling bearing toward an axial center side, and
   an opening (41, 141) running through the outer ring positioning member in a radial direction is formed at an end surface (43, 44, 143) of the outer ring positioning member abutting the offset side surface.
   According to the configuration of [1], regarding the lubricant (G) supplied to the inside of the rolling bearing (20, 20A, 20B, 20C, 20D, 20E, 20F, 20G, 120A), a part of the lubricant (G) that is unnecessary is flicked off to an outer diameter side via the opening (41, 141) and a portion opened to a radially outer side on an axial back surface side of the outer ring (22, 22A, 22B, 22C, 22D, 22E, 22F, 22G, 122) by the action of a centrifugal force due to a rotational force of the inner ring and a cage. Accordingly, the stirring resistance of the lubricant (G) is reduced, heat generation is restricted, a favorable lubrication state is maintained, and as a result, the life of the rolling bearing (20, 20A, 20B, 20C, 20D, 20E, 20F, 20G, 120A) is extended. Since the magnitude of the centrifugal force that flicks off the lubricant (G) changes according to a rotational speed of the rolling bearing (20, 20A, 20B, 20C, 20D, 20E, 20F, 20G, 120A), that is, the inner ring and the cage, it is possible to appropriately supply the lubricant according to the rotational speed.
[2] The bearing device (front bearing devices 10, 10A, 10B, 10C, 10D, and 10E, and rear bearing device 110A) according to the above [1], in which
   a storage space (51, 151) capable of storing the lubricant (G) discharged from the inside of the rolling bearing (20, 20A, 20B, 20C, 20D, 20E, 20F, 20G, 120A) is provided in the housing (50, 50A, 50B, 50C) on a radially outer side of the opening (41, 141).
   According to the configuration of [2], a part of the lubricant (G) flicked off to the radially outer side of the rolling bearing (20, 20A, 20B, 20C, 20D, 20E, 20F, 20G, 120A) is forcibly and continuously discharged to the storage space (51, 151) via the opening (41, 141) and the portion opened to the radially outer side on the axial back surface side of the outer ring (22, 22A, 22B, 22C, 22D, 22E, 22F, 22G, 122), and is stored in the storage space (51, 151).
[3] A spindle device (200) for a machine tool main shaft in which a spindle (60) is rotatably supported by the bearing device (front bearing devices 10, 10A, 10B, 10C, 10D, and 10E, and rear bearing device 110A) according to [1] or [2].
   According to the configuration of [3], the spindle (60) of the spindle device for a machine tool main shaft that rotates at a high speed can be supported by the rolling bearing (20, 20A, 20B, 20C, 20D, 20E, 20F, 20G, and 120A) having a long life, and the maintenance is facilitated.
[4] A spindle device for a high-speed motor in which a spindle is rotatably supported by the bearing device (front bearing devices 10, 10A, 10B, 10C, 10D, and 10E, and rear bearing device 110A) according to [1] or [2].

According to the configuration of [4], the spindle (60) of the spindle device for a high-speed motor that rotates at a high speed can be supported by the rolling bearing (20, 20A, 20B, 20C, 20D, 20E, 20F, 20G, and 120A) having a long life, and the maintenance is facilitated.

The present application is based on a Japanese patent application (No. 2023-113273) filed on July 10, 2023, contents of which are incorporated herein by reference.

### INDUSTRIAL APPLICABILITY

According to the bearing device of the present invention, it is possible to efficiently discharge the lubricant supplied to the bearing, to stably perform a continuous operation for a long time while maintaining a favorable lubrication state, and to extend the life of the bearing.

Further, according to the spindle device for a machine tool main shaft and the spindle device for a high-speed motor of the present invention, since the spindle is rotatably supported by the bearing device described above, the stirring resistance of the lubricant accompanying the rotation of the spindle can be reduced to be small, a temperature rise and a torque increase of the bearing can be restricted, the life of the bearing can be extended, and the maintenance is facilitated.

### REFERENCE SIGNS LIST

10: front bearing device (bearing device)
20: rolling bearing
22: outer ring
40: outer ring spacer (outer ring positioning member)
50: housing
40B: outer ring retainer (outer ring positioning member)
52: lubricant supply path
60: spindle
200: spindle device for machine tool main shaft
G: lubricant

## Claims

1. A bearing device comprising:
a housing;
a rolling bearing that rotatably supports a spindle with respect to the housing; and
an outer ring positioning member that is fitted into the housing and positions an outer ring of the rolling bearing in an axial direction, wherein
a lubricant is supplied to an inside of the rolling bearing via a lubricant supply path,
at least one side surface of the outer ring is offset from a side surface of an inner ring of the rolling bearing toward an axial center side, and
an opening running through the outer ring positioning member in a radial direction is formed at an end surface of the outer ring positioning member abutting the offset side surface.

2. The bearing device according to claim 1, wherein
a storage space capable of storing the lubricant discharged from the inside of the rolling bearing is formed in the housing on a radially outer side of the opening.

3. A spindle device for a machine tool main shaft in which a spindle is rotatably supported by the bearing device according to claim 1 or 2.

4. A spindle device for a high-speed motor in which a spindle is rotatably supported by the bearing device according to claim 1 or 2.
